# EUROPEAN PATENT SPECIFICATION

(11) **EP 1 618 303 B1**
(45) Date of publication and mention of the grant of the patent: **14.02.2007**
(21) Application number: 04728742.0
(22) Date of filing: 22.04.2004
(51) Int. Cl.: F04B 35/04, H02K 33/02

(54) **SYSTEM FOR ADJUSTING RESONANCE FREQUENCIES IN A LINEAR COMPRESSOR**
SYSTEM ZUM VERSTELLEN DER RESONANZFREQUENZEN BEI EINEM LINEARKOMPRESSOR
SYSTEME DE REGLAGE DE FREQUENCES DE RESONANCE DANS UN COMPRESSEUR LINEAIRE

(30) Priority: 23.04.2003 BR 0301492
(43) Date of publication of application: 25.01.2006
(73) Proprietor: WHIRLPOOL S.A., 04578-000 São Paulo SP (BR)
(72) Inventor: PUFF, Rinaldo, 89220-160 Joinville - SC (BR); LILIE, Dietmar, Erich, Bernhard, 89204-060 Joinville - SC (BR); BERWANGER, Egídio, 89219-901 Joinville - SC (BR)
(74) Representative: Geyer, Fehners & Partner
(86) International application number: PCT/BR2004/000057
(87) International publication number: WO 2004/094826

(56) References cited:
- EP-A- 0 952 347
- US-A- 2 988 264
- US-A- 3 490 684
- US-A- 4 353 220
- US-A1- 2003 026 716

## Description

### Field of the Invention

The present invention refers to a system for controlling and adjusting the resonance frequencies in a linear compressor of the type used in small refrigeration appliances, such as refrigerators, freezers, water fountains, etc.

### Background of the Invention

Linear compressors present a mechanical resonance frequency that is defined by the spring constant and by the masses of the movable components of said compressor when the latter is working with no gas load to be refrigerated (unloaded), i.e., with no gas being pumped. The mechanical resonance frequency of the mass-spring system of the compressor is a function of the mass-spring project thereof and defines the natural mechanical resonance frequency of the compressor.

The mechanical resonance frequency during the operation of the compressor, with the latter pumping gas under a determined pressure ratio, said pressure ratio being defined as the discharge pressure divided by the suction pressure, is influenced by the gas-spring effect resulting from the compression of the refrigerant fluid in the compression chamber of the compressor, which effect is higher or lower, depending on the pressure/dead volume ratio.

The mass-spring system of the compressor is designed to present a mechanical resonance frequency substantially close to the electrical supply frequency of the power system, i.e., about 50Hz or 60Hz, depending on the location. The attainment of this objective may be called operational tuning.

In the tuning condition between the mechanical resonance frequency of the compressor and the electrical supply frequency of the power system, the energy that must be supplied to the compressor is basically the sum of the energy consumed for gas compression and the energy consumed with friction between the movable parts in operation.

The known compressor designs usually present a mass-spring system with a natural mechanical resonance frequency, without considering the loads below the electrical supply frequency of the power system.

In order to be efficient during operation in a refrigeration system, the linear compressor must have its mechanical resonance frequency equal or at least substantially equal to the electrical frequency supplied to the motor of the compressor, since in this condition there is a balance between the accumulation and liberation of energy, establishing a tuned operational condition. When the compressor is working out of tune, it needs to receive more energy to keep it running and also to generate compression work.

The gas being pumped during the operation of the compressor in a refrigeration system acts as an additional spring in the mass-spring system of the compressor, modifying its mechanical resonance frequency, conducting the latter to values that can diverge upwardly or downwardly from the value of the electrical supply frequency of the power system. This additional spring, or gas-spring, presents an average constant which is a function of the pressure/dead volume ratio. When gas is compressed outwardly from the cylinder, part of the compression energy returns to the mechanical system, delivering work back to the mechanical system, resulting in a spring effect. In pressure ratio increase conditions, the gas-spring effect is intensified, increasing the mechanical resonance frequency. In dead volume increase conditions, upon reducing the capacity of the compressor, the gas-spring effect is also intensified, increasing the mechanical resonance frequency.

In the refrigeration system, the pressures depend on the thermal load existing inside the refrigeration appliance, i.e., the source of thermal load existing in the interior thereof and which is generating heat, which the system has to remove; and on the temperature of the environment where the refrigerator is located, since, if the temperature of this environment is high, the temperature of the condenser must be higher than the temperature of the environment, since the condenser must work transferring heat to the environment that is external to that being refrigerated by the refrigeration appliance.

In warmer days, as well as in conditions in which more load is to be refrigerated, the gas compression pressures rise and the compressor is forced to work more so that the refrigeration system can remove heat from the medium under refrigeration. The pressure variations in the refrigeration system vary the capacity of the compressor and modify the tuning condition between its mechanical resonance frequency and the electrical supply frequency of the power system.

In determined situations, the loss of balance between the electrical and mechanical frequencies in the compressor results, for the latter, in a higher need of energy to maintain the pumping of gas.

In a situation in which the refrigeration appliance is conducted from a turn-off condition to a turn-on condition, the refrigeration system of this appliance is submitted to high pressure peaks, with maximum pumping capacity, which increases the mechanical resonance frequency of the compressor, causing unbalance between said mechanical resonance frequency and the electrical supply frequency of the power system. In such conditions, the motor of the compressor has to increase its operational force to keep the mechanism in the same frequency as that of the power system. Since the motor yield is a function of its effort to operate, there is loss of motor efficiency whenever the mechanical resonance frequency is not equalized with the electrical supply frequency of the power system.

There are known from the prior art solutions to adjust the electrical supply frequency with the mechanical resonance frequency of the compressor under operation. In one of said solutions, the frequency adjustment is obtained by electronic balance, rectifying the frequency of the power system and then altering the latter according to the changes that occur in the mechanical system.

In a particular solution within this concept, the electronic balance is achieved by varying the velocity of the compressor motor (Brazilian patent document PI9601535-7). However, this solution is expensive and presents energy loss. A further linear compressor having a system for adjusting resonant frequencies is known from US Patent 4,353,220.

There are not known prior art solutions for adjusting the mechanical resonance frequency, which allow, during operational conditions, correcting said frequency and making it substantially equal to the electrical supply frequency of the power system.

### Objects of the Invention

Thus, it is an object of the present invention to provide a system for adjusting the resonance frequencies in a linear compressor, which controls and conducts the mechanical resonance frequency of the compressor, at least in determined operational conditions, to values that are substantially close to the electrical supply frequency of the compressor, without presenting the high costs and high energy losses of the electronic control systems.

It is a further object of the invention to provide a system such as mentioned above, which maintains the dead volume of the compressor at a minimum value during the operation thereof, maintaining an adequate volumetric yield, with minimum energy loss.

### Disclosure of the Invention

These and other objects are achieved through a linear compressor as defined by the subject-matter of patent claim 1.

### Brief Description of the Drawings

The invention will be described below, with reference to the attached drawing, in which:

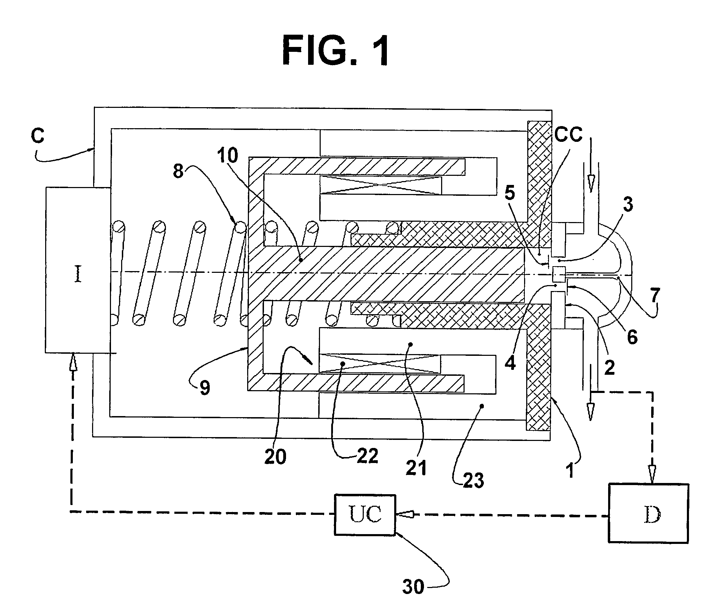

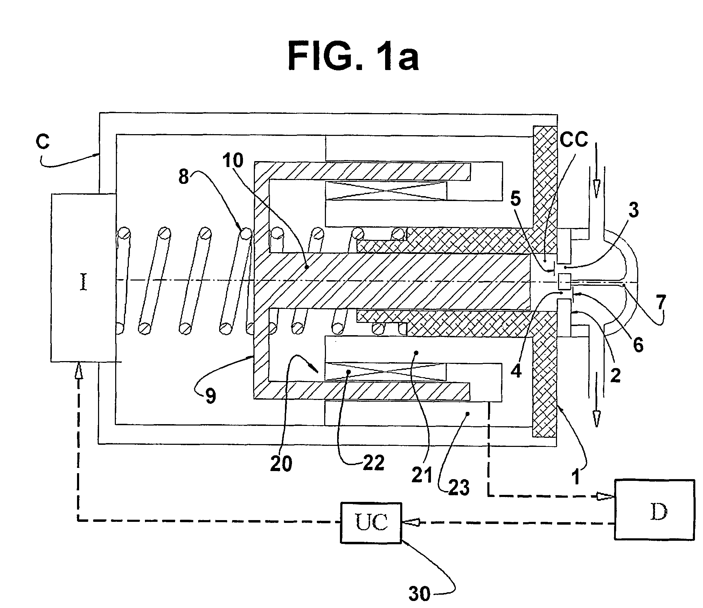

Figure 1 is a simplified schematic longitudinal vertical sectional view of a linear compressor to which the present invention can be applied;
Figure 1a is a schematic view, similar to that of figure 1, but illustrating another embodiment of the present solution;
Figure 2 is a partial schematic longitudinal sectional view of the compressor of figure 1, illustrating a first embodiment of the invention, according to which the piston dead point, opposite to the valve plate, is varied by a hydraulic or pneumatic impeller;
Figure 3 is a partial schematic longitudinal sectional view of the compressor of figure 1, illustrating a second embodiment of the invention, in which the piston dead point, opposite to the valve plate, is varied by a hydraulic or pneumatic impeller;
Figure 4 is a partial schematic longitudinal sectional view of the compressor of figure 1, illustrating a third embodiment of the invention, in which the piston dead point, opposite to the valve plate, is varied by a mechanical impeller in the form of a cam with linear displacement;
Figure 4a is a partial schematic longitudinal sectional view of the compressor of figure 1, illustrating another embodiment for the cam with linear displacement of the third embodiment of the invention:
Figure 5 is a partial schematic longitudinal sectional view of the compressor of figure 1, illustrating a fourth embodiment of the invention, in which the piston dead point, opposite to the valve plate, is varied by a mechanical impeller in the form of a rotary cam;
Figure 6 is a partial schematic longitudinal sectional view of the compressor of figure 1, illustrating a fifth embodiment of the invention, in which the piston dead point, opposite to the valve plate, is varied by a mechanical impeller in the form of a screw shaped mechanical stop means;
Figure 7 is a partial schematic longitudinal sectional view of the compressor of figure 1, illustrating a sixth embodiment of the invention, in which the piston dead point, opposite to the valve plate, is varied by a pneumatic impeller with a particular construction; and
Figure 8 is a partial schematic longitudinal sectional view of the compressor of figure 1, illustrating a seventh embodiment of the invention, in which the variation of the adjustment of the resonance frequencies of the present invention is obtained by varying the mass in the interior of the piston.

### Description of the Illustrated Embodiments

The present invention will be described in relation to a reciprocating compressor driven by a linear motor of the type used in refrigeration systems and comprising, within a hermetic shell (not illustrated), a motor-compressor assembly including a cylinder 1, which is closed, at one of the ends thereof, by a valve plate 2, and inside which is provided a piston 10 reciprocating in consecutive suction and compression strokes.

In conventional constructions, an internal lower portion of the shell defines a reservoir for the lubricant oil of the compressor.

In the valve plate 2 there are defined a suction orifice 3 and a discharge orifice 4 of the compressor, which are respectively and selectively closed by a suction valve 5 and by a discharge valve 6, in order to allow the selective fluid communication between a compression chamber CC, which is defined within the cylinder 1 between a top portion of the piston 10 and the valve plate 2, and respective internal portions of a cylinder head 7 which are maintained in fluid communication with the low pressure and high pressure sides of the refrigeration system including the compressor.

As illustrated in the appended drawings, the compressor further comprises a linear motor 20, mounted around the cylinder 1 and the piston 10 and including a stack of internal laminations 21 with a magnet 22 inserted therein and which is axially impelled upon energization of the linear motor 20, and a stack of external laminations 23.

In the illustrated construction, the compressor further includes a conventional spring means 8, coupling a resonant assembly to a non-resonant assembly C of the compressor and which is elastically axially deformable in the displacement direction of the piston 10, and an actuating means 9 that carries the magnet 22, said actuating means 9 operatively coupling the piston 10 to the linear motor and defining, with said piston 10 and spring means 8, a resonant assembly of the compressor.

The linear motor 20 is supplied by an electrical current presenting an electrical supply frequency that is previously determined, for example around 50 or 60Hz, which generally corresponds to the electrical supply frequency of the power system.

According to the present invention, the adjustment between the mechanical resonance frequency of the compressor and the electrical supply frequency thereof is achieved through a system for adjusting the frequencies which comprises, generically, a detecting means D for sensing a load imposed to the linear motor 20 of the compressor in an operational condition thereof and which is related to the pressure of the gas at its discharge ; a frequency adjusting means, which is operatively associated with the detecting means D and with the resonant assembly, so as to define, as a function of the operational condition detected for the gas in the discharge of the compressor, for example, at least one of the conditions of: pressure and temperature of the gas compressed in the discharge of the compressor, and operational electrical current of the linear motor 20, a frequency adjustment, by varying at least one of the values related to the mass of the resonant assembly and to the average stroke of the piston 10, to a value of the mechanical resonance frequency of the resonant assembly corresponding to the electrical supply frequency, maintaining unaltered the minimum distance between the piston 10 and the valve plate 2 at the end of each compression stroke.

In one embodiment to be described below, the adjusting system of the present invention comprises a control unit 30, operatively connected with both the detecting means D and the adjusting means, in order to receive, from the former, information about one of the operational conditions of: pressure and temperature of the gas in the discharge of the compressor, and operational electrical current of the linear motor 20, in order to instruct the adjusting means to provide one of the operations related to varying the average stroke of the piston 10 and varying the mass of the resonant assembly.

In a refrigeration system, the pressures depend on the thermal load found inside the refrigeration appliance generating heat, which the refrigeration system has to remove and which defines the temperature of the medium; the higher the temperature of the medium, the higher must be the temperature of the condenser so as to transfer heat to said medium. The pressures in the refrigeration system change continuously and to compensate such changes, it is necessary to vary the capacity of the compressor.

In a situation in which the refrigeration appliance, for example a refrigerator, is conducted from a turn-off condition to a turn-on condition, the refrigeration system is submitted to a high pressure peak, increasing the mechanical resonance frequency.

On the other hand, variations in the load imposed to the linear motor 20 provoke a variation in the phase/intensity of the current, with the dynamics of the mechanism being defined by one of the following parameters: displacement, velocity, or acceleration.

The adjustment of the mechanical resonance frequency to the electrical supply frequency can be achieved by:
- varying the discharge pressure/suction pressure ratio, considering that rises of the pressure ratio increases the mechanical resonance frequency;
- varying the stroke of the piston 10, considering that increases of the stroke reduce the mechanical resonance frequency ;
- varying the dead volume, considering that the rise of the dead volume increases the mechanical resonance frequency: and
- varying the mass of the piston 10, considering that the increase of the mass of the piston 10 reduces the mechanical resonance frequency.

The present invention provides a system for adjusting the resonances, which uses at least one of the values related to the average stroke of the piston 10 and to the mass of the resonant assembly of the compressor, tuning the compressor for working in a high pressure ratio condition, in order to overcome the critical conditions required by the refrigeration system, with a minimum dead volume.

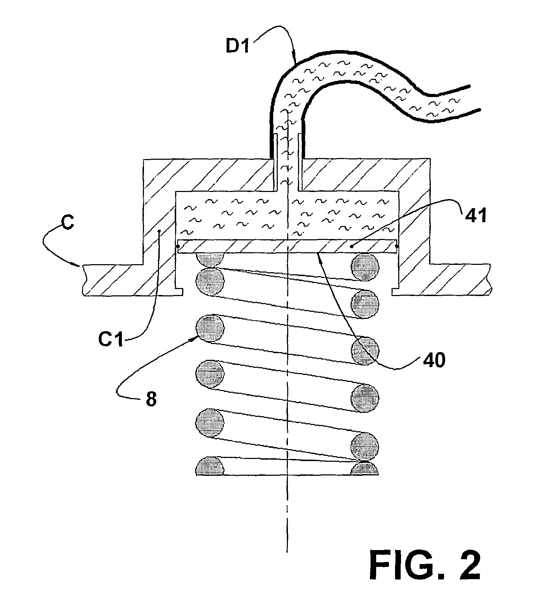

According to the constructive forms of the invention illustrated in figures 2-7, the desired adjustment for the mechanical resonance frequency of the resonant assembly is effected by an adjusting means that varies the operational average stroke of the piston 10, obtained by modifying the dead point of the piston 10 at the end of the suction stroke.

In the embodiments illustrated in figures 2-6, the modification of the dead point of the piston 10 at the end of the suction stroke is effected by an adjusting means in the form of an impeller I, which can be defined, for example, by an hydraulic actuator, a pneumatic actuator, and a mechanical actuator which is operatively coupled to the resonant assembly and to the control unit 30, so as to be driven by the latter between an inoperative condition, in which it does not produce any alteration in the stroke of the piston 10, and an operative condition, in which it modifies the stroke of the piston 10 for adjusting the mechanical resonance frequency of the resonant assembly to the electrical supply frequency.

In the embodiment of figure 2, in which the impeller I is a hydraulic actuator 40, the latter has a cylinder C1 defined in a portion of the non-resonant assembly C of the compressor, and a plunger operatively coupled to the spring means 8, the hydraulic actuator 40 being maintained in direct fluid communication with a reservoir of equalizing fluid provided in the interior or exterior of the compressor shell, through an adequate duct D1. In one embodiment of the present solution, the equalizing fluid is the lubricant oil of the compressor.

In the embodiment in which the impeller I is a pneumatic actuator 50, the latter can be also constructed as described in relation to the hydraulic actuator 40 illustrated in figure 2, by only substituting the non-compressible equalizing fluid for a compressible fluid, such as gas. In one constructive solution, the gas that activates the pneumatic actuator 50 is the refrigerant gas that existing inside the shell.

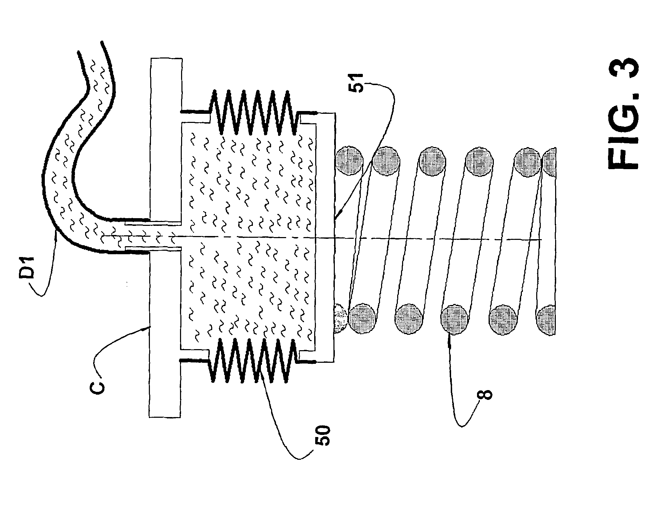

In one embodiment of the present invention illustrated in figure 3, the pneumatic actuator 50 is in the form of a bellows operatively coupled to the non-resonant assembly C and to the spring means 8.

As it can be noted, the higher or lower internal pressurization of the hydraulic or pneumatic actuator allows a predetermined axial displacement of the respective piston 41 or 51 to be obtained, in order to cause a corresponding modification of the suction dead point of the piston 10 at the end of the suction stroke, which is necessary to produce a variation in the mechanical frequency of the resonant assemble that is capable of compensating the variations of said frequency as a function of the modifications of the operational conditions of the refrigeration system. This variation of the stroke of the piston 10 is effected so as to keep unaltered the dead point of the piston at the end of the compression stroke, that is, the dead volume in the compression chamber CC.

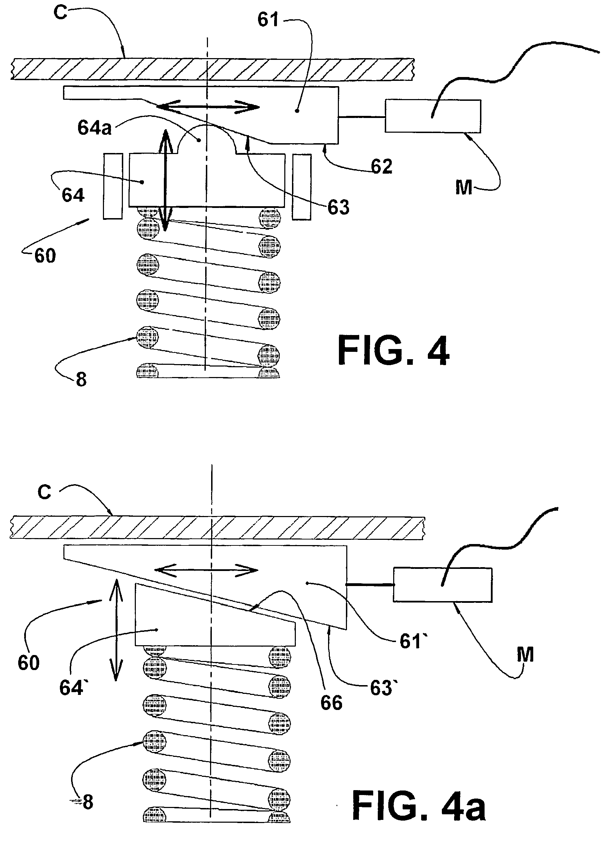

According to the illustrations in figures 4-6, the impeller I is a mechanical actuator, operatively coupled to the non-resonant assembly C and to the spring means 8 and which is operated by a driving means M, in the form of a motor or a hydraulic or pneumatic actuator, which moves said mechanical actuator to different operational positions.

In one embodiment of the present invention, the driving means M is an electric motor operatively connected to the control unit 30, so as to receive, from the latter, instructions to vary the average stroke of the piston 10.

In the embodiment illustrated in figure 4, a mechanical actuator 60 is in the form of a cam of linear displacement 61, which is for example provided with steps 62 which are dimensioned to define different positions for the dead point of the piston 10 at the end of the suction stroke. In the illustrated construction, the cam of linear displacement 61 has two steps 62 defining two different positioning levels for the dead point of the piston 10 at the end of its suction stroke, said steps 62 being joined to each other through a ramp surface 63.

In this embodiment, the cam of linear displacement 61 acts against a slide 64, axially movable and which defines a cam follower that is seated on the spring means 8 of the resonant assembly C. The slide 64 has its axial displacement effected in the interior of the guide means 65 incorporated to the non-resonant assembly C.

In this illustrated embodiment, the slide carries a contact portion 64a, such as a portion with a convex surface that is incorporated to the surface of the slide 64 confronting with the cam of linear displacement 61, said convex surface being a spherical calotte, as illustrated.

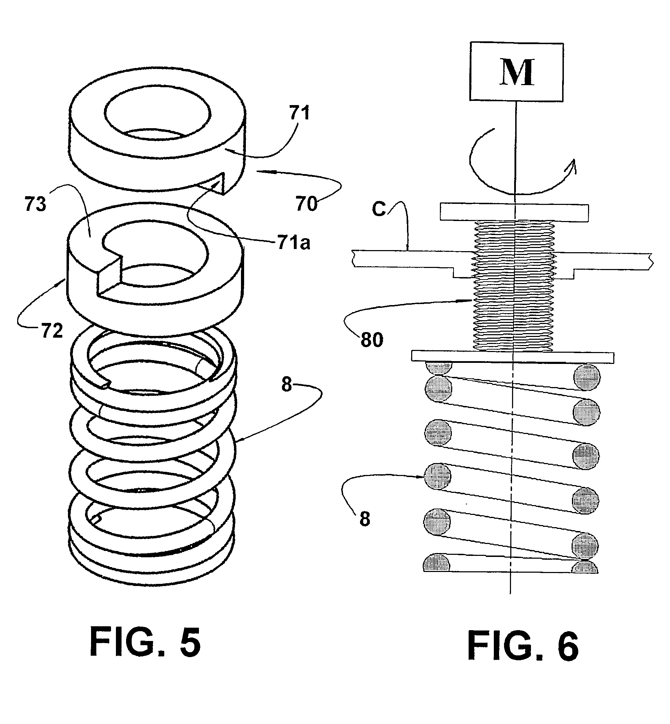

Figure 4a illustrates a different construction for the present solution, in which a mechanical actuator 60 is in the form of a cam of linear displacement 61' presenting a ramp surface 63' which is slidingly seated against a confronting inclined surface 66 of an axially moving slide 64' which defines a cam follower, such as described in relation to the slide 64. As described in relation to the construction illustrated in figure 4, in this construction the slide 64' is seated on the spring means 8 of the resonant assembly. In another construction, as illustrated in figure 5, a mechanical actuator 70 is in the form of a rotary cam 71 presenting a continuous ramp surface 71a, which is dimensioned so as to define, continuously, different positions for the dead point of the piston 10 at the end of the suction stroke, said rotary cam 71 being mounted to an adjacent portion of the non-resonant assembly C and acting against a slide 72 defining a cam follower seated on the spring means 8 of the resonant assembly, said slide 72 being also provided with a continuous ramp surface 73, against which the continuous ramp surface 71a of the rotary cam 71 is slidingly seated.

In the construction illustrated in figure 6, the mechanical actuator is in the form of a mechanical stop means 80, threaded to the non-resonant assembly C and operatively coupled to the resonant assembly, in order to alter the dead point of the piston 10 at the end of the suction stroke, upon being rotated around its longitudinal axis by any driving means M.

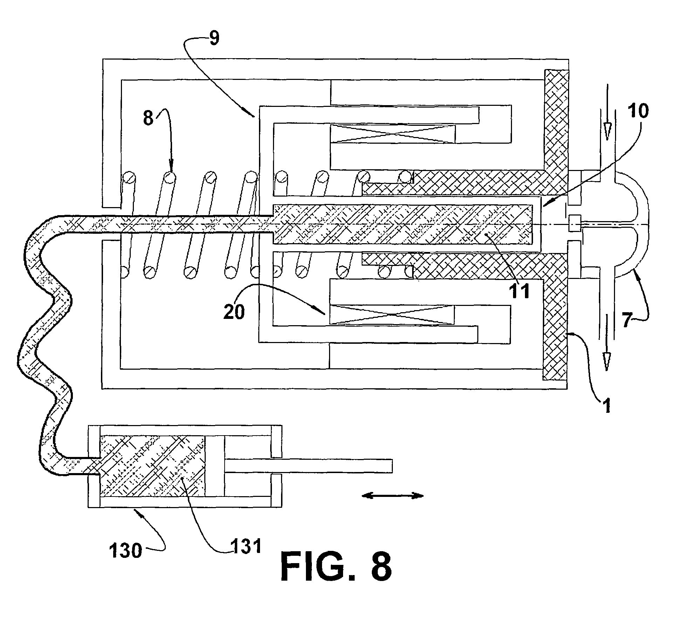

In these constructive solutions illustrated in figures 2-6, as well as in figure 8 to be discussed below, the modifications of the dead point of the piston 10 at the end of the suction stroke are commanded by a control unit 30, as a function of the information the latter receives from the detecting means D.

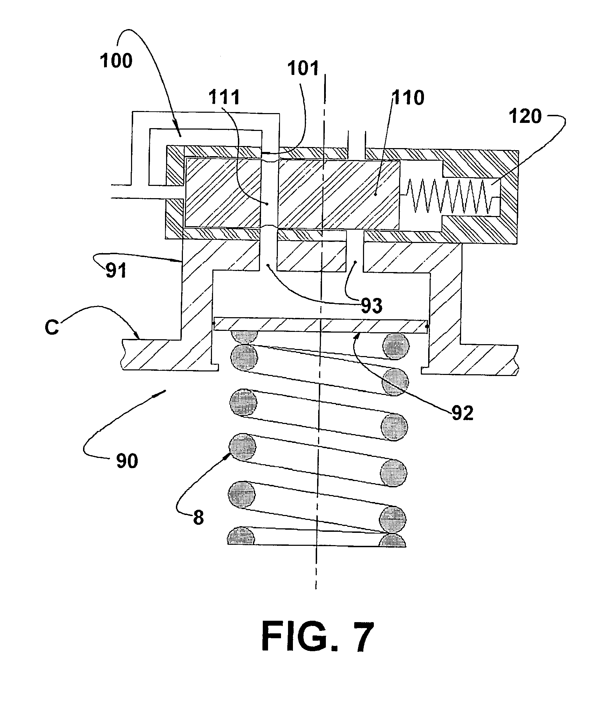

According the constructive form of the present invention illustrated in figure 7, the dead point of the piston 10 at the end of the suction stroke is automatically modified by the gas pressure variations in the discharge of the compressor.

In this construction, the impeller I is a pneumatic actuator 90, constructed for example as described in relation to the hydraulic actuator illustrated in figure 2 and which presents a cylinder 91, incorporated to the non-resonant assembly C, and a plunger 92 axially displaceable within the cylinder 91 and operating as a movable stop means onto which the spring means 8 of the resonant assembly will be seated.

In this construction, the displacement of the plunger 92 is obtained by the higher or lower pressurization of the cylinder 91, by means of the refrigerant gas that is used in the refrigeration system.

In the construction illustrated in figure 7, the closed end of the cylinder 91 is provided with at least one opening 93 maintained in fluid communication with the interior of the body of a control valve 100 lodging a sealing means 110 which is selectively displaced between a closed position, a pressurization position, and depressurization position, in order to, respectively, block the opening 93 of the cylinder 91 upon discharge of the compressor and communicate the interior of the cylinder 91 with the interior of the compressor shell.

The control valve 100 presents at least two passages 101, one of which being opened to the interior of the compressor shell and the other of said passages 101 being defined opened to a respective opening 93 of the closed end of the cylinder 91, so as to allow, selectively, the fluid communication between the interior of the cylinder 91 and the interior of the compressor shell, as a function of the displacement of the sealing means 110 in the interior of control valve 100.

The closing of the opening 93 by the sealing means 110 allows the plunger 92 to be maintained in a stable position, defining a determined stroke for the piston 10. Upon occurring a rise in the discharge pressure, the sealing means is automatically displaced to the depressurization position, in order to communicate the interior of the cylinder 91 with the compressor shell, promoting depressurization thereof, sufficient to correspondingly reduce the mechanical resonance frequency, by increasing the average course of the piston 10. The plunger 92 is axially displaced towards the closed end of the cylinder 91.

On the other hand, upon occurring a reduction in the discharge pressure of the compressor, the sealing means 110 is automatically displaced to the pressurization position, communicating the interior of the cylinder 91, by aligning an opening 93 and a passage of the control valve 100, with the discharge of the compressor, promoting a degree of pressurization of the cylinder 91 sufficient to displace the plunger 92 toward the open end of the cylinder 91, thereby reducing the average stroke of the piston 10 and consequently increasing the mechanical resonance frequency to compensate for the reduction in the latter caused by the discharge pressure drop.

The displacement of the sealing means 110 between its different operational positions is achieved, in a first direction, by the discharge pressure itself, which is acting on the sealing means 110 in a direction opposite to that of the force produced by the discharge gas pressure.

In the illustrated example, the sealing means 110 takes the form of a slide provided with an internal passage 111 and which is linearly displaced, in one and in the other direction, by the discharge gas pressure and by a return elastic means 20, in order to align or disalign said passage 101 of the sealing means 110 in relation to each passage 101 provided in the construction of the illustrated control valve 100. In the constructions presenting modifications in the operational average stroke of the piston 10, obtained by varying the dead point of the piston 10 at the end of the suction stroke, the present solution implies that upon being detected, for example a temperature (or pressure) rise of the gas compressed by the compressor, the impeller means I, automatically or by instruction of the control unit 30, acts on the resonant assembly, so as to reduce the average stroke of the piston 10 by a sufficient value to cause a corresponding rise in the mechanical resonance frequency of the resonant assembly of the compressor, until the mechanical resonance frequency is adjusted to the electrical supply frequency of the compressor.

In the case of temperature (or pressure) reduction of the gas compressed by the compressor, the impelling means acts on the resonant assembly, in order to increase the average stroke of the piston 10, reducing, consequently, the mechanical resonance frequency of the compressor. These variations of the average stroke of the piston 10 are effected so as to maintain unaltered the dead point of the piston 10 at the end of the compression stroke, i.e., the dead volume in the compression chamber CC.

In the embodiment illustrated in figure 8, the frequency adjustment of the compressor is achieved by an adjusting means, which varies the mass of the resonant assembly, for example, by varying the mass of at least one of the parts defined by the piston 10 and the actuating means 9. In this solution, the modifications are commanded by the control unit 30, as a function of the information received from the detecting means.

According to the present invention, each part of the resonant assembly to have its mass modified comprises an internal chamber 11 containing an equalizing fluid and which is maintained in fluid communication with an equalizing fluid reservoir defined in the interior or in the exterior of the compressor shell, the variation of the mass of the resonant assembly being obtained by altering the mass of the fluid inside the internal chamber.

In the illustrated construction, the variation of the mass of the resonant assembly is obtained by varying the mass in an internal chamber 11, for example presenting a constant volume and being defined in the piston 10, said internal chamber 11 being maintained in fluid communication with an equalizing fluid impelling means 130 provided inside the compressor shell in fluid communication with the equalizing fluid reservoir, so as to, selectively, pump said equalizing fluid into and out from said internal chamber 11, by instruction of the control unit 30.

In one embodiment of the present invention, the equalizing fluid is defined by the lubricant oil of the compressor provided in the oil reservoir defined at the bottom of the compressor shell.

According to this embodiment, when the detecting means informs the control unit 30 that there occurred a value variation in the parameter being analyzed, for example in the temperature of the gas compressed in the discharge of the compressor, the control unit 30 instructs the equalizing fluid impelling means 130 to displace a respective regulator-actuator 131, with the purpose of adding to or removing from the internal chamber 11 a determined amount of the equalizing fluid which is sufficient to permit a variation of mass which compensates for the variation of the resonance frequency caused by the variation of the gas discharge pressure, said condition being maintained by instruction of the control unit 30 until the detecting means informs the value of the considered parameter has reached a value that corresponds to the normal operation of the compressor.

The present solution implies that, upon detecting for example a temperature (or pressure) rise of the gas compressed by the compressor, the control unit 30 instructs the equalizing fluid impelling means 130 to remove a determined amount of equalizing fluid from the internal chamber 11 of the piston 10, sufficient to allow reducing the mass of the latter by a value which results in a determined increase of the mechanical resonance frequency of the resonant assembly of the compressor. The control unit 30 instructs the equalizing fluid impelling means 130 to insert a determined quantity of equalizing fluid into the internal chamber 11, increasing the mass of the resonant assembly, upon receiving information from the detecting means that the temperature (or pressure) of the compressed gas has reached a determined value which corresponds to a modification of the mechanical resonance frequency of the resonant assembly, due to an increase thereof. In this case, the instruction to increase the mass of the resonant assembly will determine, as a consequence, a reduction of the mechanical resonance frequency. These variations in the mass of the resonant assembly, particularly illustrated in relation to the piston 10, are effected by maintaining unaltered the dead point of the piston 10 at the end of the compression stroke, i.e., the dead volume in the compression chamber CC.

While some ways of carrying out the present invention have been described and illustrated, it should be understood that other embodiments are possible within the subject-matter defined in the appended claims.

## Claims

1. A linear compressor comprising a system for adjusting resonant frequencies including, in the interior of a shell: a linear motor (20) supplied by an AC electrical current presenting a predetermined electrical supply frequency; a cylinder (1) within which is defined a compression chamber (CC) closed by a valve plate (2); a piston (10) reciprocating inside the cylinder (1) in consecutive suction and compression strokes ; and an actuating means (9) operatively coupling the piston (10) to the linear motor (20), said piston (10) and actuating means (9) forming part of a resonant assembly,
and further including:
- a detecting means (D) to detect a load imposed to the linear motor (20) of the compressor, in an operational condition of the latter related to the gas pressure in the discharge thereof, and
- a frequency adjusting means operatively associated with the detecting means (D) and with the resonant assembly, in order to define, as a function of the operational condition detected for the gas in the discharge of the compressor, a frequency adjustment to a value of the mechanical resonance frequency of the resonant assembly corresponding to the electrical supply frequency, maintaining unaltered the minimum distance between the piston (10) and the valve plate (2) at the end of each compression stroke, by varying the mass of the resonant assembly and/or the average stroke of the piston (10), the variation of the operational stroke of the piston (10) being obtained by modifying the dead point of the piston (10) at the end of the suction stroke.

2. A linear compressor according to claim 1, wherein the detecting means (D) detects at least one of the conditions of: pressure and temperature of the gas compressed in the discharge of the compressor, and operational electrical current of the linear motor (20).

3. A linear compressor according to claim 2, in which the frequency adjusting means are adapted to vary the average stroke of the piston (10), further comprising a control unit (30) operatively connected to both the detecting means (D) and the adjusting means, in order to receive, from the former, information about one of the operational conditions of pressure and temperature of the gas in the discharge of the compressor and operational electrical current of the linear motor (20), and to instruct the adjusting means to vary the average stroke of the piston (10) or to vary the mass of the resonant assembly.

4. A linear compressor according to claim 1, in which the frequency adjusting means are adapted to effect a variation of the mass of the resonant assembly which is achieved by modifying the mass of the actuating means (9) and/or the piston (10).

5. A linear compressor according to claim 4, in which each part of the resonant assembly, to have its mass modified, comprises an internal chamber (11) containing an equalizing fluid and being maintained in fluid communication with an equalizing fluid reservoir defined in the interior of the compressor shell, the variation of the mass of the resonant assembly being achieved by modifying the mass of the fluid inside the internal chamber (11).

6. A linear compressor according to claim 5, in which the piston (10) comprises an internal chamber (11) presenting a constant volume and being maintained in fluid communication with an equalizing fluid impelling means (130) provided in the interior of the shell in fluid communication with the equalizing fluid reservoir, in order to selectively pump said equalizing fluid into and out from that internal chamber (11) of the piston (10).

7. A linear compressor according to claim 6, in which the equalizing fluid is defined by the lubricant oil of the compressor provided in an oil reservoir defined at the bottom of the compressor shell.

8. A linear compressor according to claim 1, wherein the modification of the dead point of the piston (10) at the end of the suction stroke is achieved by an adjusting means in the form of an impeller (I), which is operatively coupled to the resonant assembly and to the control unit (30), so as to be driven by the latter between an inoperative condition, in which it does not produce any alteration in the stroke of the piston (10), and an operative condition, in which it modifies the stroke of the piston (10) for adjusting the mechanical resonance frequency of the resonant assembly to the electrical supply resonant frequency.

9. A linear compressor according to claim 8, wherein the impeller (I) is a hydraulic actuator (40), a pneumatic actuator (50) or a mechanical actuator (60).

10. A linear compressor according to claim 9, wherein the hydraulic actuator (40) or pneumatic actuator (50) is maintained in fluid communication with an equalizing fluid reservoir provided in the interior of the shell, said hydraulic actuator (40) or pneumatic actuator (50) being defined in a non-resonant portion of the compressor.

11. A linear compressor according to claim 10, in which the resonant assembly comprises a spring means (8) coupling the resonant assembly to a non-resonant assembly (C) of the compressor, wherein the hydraulic actuator (40) or pneumatic actuator (50) is operatively coupled to the spring means (8).

12. A linear compressor according to claim 11, wherein in the bottom of the shell there is provided a lubricant oil reservoir and the equalizing fluid is the lubricant oil of the compressor.

13. A linear compressor according to claim 9, wherein the impeller (I) is a pneumatic actuator (50) having a cylinder (91) incorporated to the non-resonant assembly (C) and a plunger (92) axially displaceable in the interior of the cylinder (91) and operating as a movable stop means onto which is seated the spring means (8) of the resonant assembly.

14. A linear compressor according to claim 13, wherein the pneumatic actuator (50) is a bellows.

15. A linear compressor according to claim 9, wherein the impeller (I) is a mechanical actuator, and the resonant assembly is coupled by a spring means (8) to a non-resonant assembly (C) of the compressor, wherein the mechanical actuator (60, 70, 80) is operatively coupled to the non-resonant assembly (C) and to the spring means (8) and operated by a driving means ((M), which moves said mechanical actuator (60, 70, 80) to different operational position.

16. A linear compressor according to claim 15, wherein the driving means (M) is a motor, a hydraulic actuator or a pneumatic actuator.

17. A linear compressor according to claim 16, wherein the driving means (M) is operatively connected to the control unit (30).

18. A linear compressor according to claim 15, wherein the mechanical actuator (60, 70,) comprises a linearly displaceable cam (61, 61') or a rotary cam (71), coupled to the non-resonant assembly (C) of the compressor, as well as a slide (64, 64', 72) defining a cam follower coupling the linearly displaceable cam (61, 61') or the rotary cam (71) to the spring means (8).

19. A linear compressor according to claim 18, wherein the linearly displaceable cam (61) is provided with steps (62) which are dimensioned so as to define different positions for the dead point of the piston (10) at the end of the suction stroke.

20. A linear compressor according to claim 19, wherein the slide (64) associated with the linearly displaceable cam (61) carries a contact portion (64a) in a surface of said slide (64) confronting with the linearly displaceable cam (61).

21. A linear compressor according to claim 19, wherein the contact portion (64a) is a convex surface portion incorporated to the surface of the slide (64) confronting with the linearly displaceable cam (61).

22. A linear compressor according to claim 18, wherein the linearly displaceable cam (61') presents one ramp surface (63') which is slidingly seated against a confronting inclined surface (66) of the slide (64').

23. A linear compressor according to claim 18, wherein the rotary cam (71) is provided with a continuous ramp (71a) which is dimensioned so as to define, continuously, by actuating on the slide (72), different positions for the dead point of the piston (10) at the end of the suction stroke.

24. A linear compressor according to claim 15, wherein the mechanical actuator comprises a mechanical stop means (80) threaded to the non-resonant assembly (C) and which is operatively coupled to the resonant assembly in order to alter the dead point of the piston (10) at the end of the suction stroke, when rotated around its longitudinal axis.

25. A linear compressor according to claim 9, in which the impeller (I) is a pneumatic actuator (50) and the equalizing fluid is the refrigerant gas compressed by the compressor.

26. A linear compressor according to claim 25, further comprising a control valve (100) maintained in fluid communication with the cylinder (91) of the pneumatic actuator (90) through at least one opening (93) of said cylinder (91), said control valve (100) lodging a sealing means (110) which is selectively displaceable between a closed position, a pressurization position and a depressurization position, in order to, selectively, block the opening (93) of the cylinder (91) upon discharge of the compressor and communicate the interior of the cylinder (91) with the interior of the compressor shell.

27. A linear compressor according to claim 26, wherein the sealing means (110) is a slide provided with an internal passage (111) and which is linearly displaceable in one and in the other direction, by the discharge gas pressure and by return elastic means (120), in order to provide the alignment and disalignment of said internal passage (111) in relation to the opening (93).

## Patentansprüche

1. Linearverdichter mit einem System zum Einstellen von Resonanzfrequenzen, der in einem Gehäuse aufweist: einen Linearmotor (20), der mit Wechselstrom einer vorbestimmten Stromversorgungsfrequenz versorgt wird, einen Zylinder (1), in dem eine mit einer Ventilplatte (2) verschlossene Kompressionskammer (CC) festgelegt ist, einen im Inneren des Zylinders (1) in aufeinanderfolgenden Ansaug- und Verdichtungshüben hin und her laufenden Kolben (10) und Betätigungsmittel (9), die den Kolben (10) betätigbar mit dem Linearmotor (20) koppeln, wobei der Kolben (10) und die Betätigungsmittel (9) Teil einer Resonanzanordnung sind,
und ferner umfaßt:
- Detektionsmittel (D) zum Detektieren einer dem Linearmotor (20) des Verdichters aufgeprägten Last in einem Betriebszustand des letzteren, der mit dem Gasdruck in dessen Auslaß zusammenhängt, und
- Frequenzeinstellmittel, die in Wirkverbindung mit der Detektionseinrichtung (D) und mit der Resonanzanordnung stehen, um abhängig vom für das Gas im Auslaß des Verdichters detektierten Betriebszustand eine Frequenzeinstellung bei einem Wert der mechanischen Resonanzfrequenz der Resonanzanordnung festzulegen, welcher der Stromversorgungsfrequenz entspricht, wobei der Mindestabstand zwischen dem Kolben (10) und der Ventilplatte (2) am Ende jedes Verdichtungshubes unverändert gehalten, die Masse der Resonanzanordnung und/oder die mittlere Hublänge des Kolbens (10) jedoch verändert wird, und die Veränderung des Arbeitshubes des Kolbens (10) durch Modifizieren des Totpunktes des Kolbens (10) am Ende des Ansaughubes erhalten wird.

2. Linearverdichter nach Anspruch 1, wobei die Detektionsmittel (D) mindestens einen der Zustände Druck und Temperatur des im Auslaß des Verdichters verdichteten Gases sowie Betriebsstrom des Linearmotors (20) detektieren.

3. Linearverdichter nach Anspruch 2, wobei die Frequenzeinstellmittel dazu eingerichtet sind, die mittlere Hublänge des Kolbens (10) zu ändern, und der Linearverdichter ferner eine Steuereinheit (30), die sowohl mit den Detektionsmitteln (D) als auch mit den Einstellmitteln in Wirkverbindung steht, um von ersteren Informationen über einen der Betriebszustände Druck und Temperatur des Gases im Auslaß des Verdichters sowie Betriebsstrom des Linearmotors (20) zu empfangen und die Einstellmittel anzuweisen, die mittlere Hublänge des Kolbens (10) oder die Masse der Resonanzanordnung zu verändern.

4. Linearverdichter nach Anspruch 1, wobei die Frequenzeinstellmittel dazu eingerichtet sind, eine Veränderung der Masse der Resonanzanordnung zu bewirken, was durch Modifizieren der Masse der Betätigungsmittel (9) und/oder des Kolbens (10) erreicht wird.

5. Linearverdichter nach Anspruch 4, wobei jedes Teil der Resonanzanordnung zum Verändern seiner Masse eine innere Kammer (11) umfaßt, die ein Ausgleichsfluid enthält und mit einem im Inneren des Verdichtergehäuses festgelegten Ausgleichsfluidtank in Fluidverbindung gehalten wird, und die Veränderung der Masse der Resonanzanordnung durch Modifizieren der Masse des Fluids innerhalb der inneren Kammer (11) erreicht wird.

6. Linearverdichter nach Anspruch 5, wobei der Kolben (10) eine innere Kammer (11) umfaßt, die ein konstantes Volumen aufweist und in Fluidverbindung mit Ausgleichsflüssigkeits-Impellermitteln (130) steht, die im Inneren des Gehäuses in Fluidverbindung mit dem Ausgleichsfluidtank vorgesehen sind, um das Ausgleichsfluid wahlweise in die innere Kammer (11) des Kolbens (10) hinein oder aus dieser heraus zu pumpen.

7. Linearverdichter nach Anspruch 6, wobei das Ausgleichsfluid durch das Schmieröl des Verdichters festgelegt ist, das in einem am Boden des Verdichtergehäuses festgelegten Öltank vorgesehen ist.

8. Linearverdichter nach Anspruch 1, wobei die Modifikation des Totpunktes des Kolbens (10) am Ende des Ansaughubes durch Einstellmittel in Form eines Verstellers (I) erreicht wird, der betätigbar mit der Resonanzanordnung und der Steuereinheit (30) gekoppelt ist, um von der letzteren zwischen einem unwirksamen Zustand, in dem er keine Änderung des Hubes des Kolbens (10) bewirkt, und einem wirksamen Zustand, in dem er den Hub des Kolbens (10) modifiziert, um die mechanische Resonanzfrequenz der Resonanzanordnung an die Stromversorgungs-Resonanzfrequenz anzupassen, betrieben zu werden.

9. Linearverdichter nach Anspruch 8, wobei der Versteller (I) ein hydraulisches Stellglied (40), ein pneumatisches Stellglied (50) oder ein mechanisches Stellglied (60) ist.

10. Linearverdichter nach Anspruch 9, wobei das hydraulische Stellglied (40) oder das pneumatische Stellglied (50) in Fluidverbindung mit einem im Inneren des Gehäuses vorgesehenen Ausgleichsfluidtank gehalten wird und in einem nicht an der Resonanz teilnehmenden Abschnitt des Verdichters festgelegt ist.

11. Linearverdichter nach Anspruch 10, wobei die Resonanzanordnung eine Federeinrichtung (8) umfaßt, welche die Resonanzanordnung mit einer nicht an der Resonanz teilnehmenden Anordnung (C) des Verdichters koppelt, und wobei das hydraulische Stellglied (40) oder das pneumatische Stellglied (50) betätigbar mit der Federeinrichtung (8) gekoppelt ist.

12. Linearverdichter nach Anspruch 11, wobei im Boden des Gehäuses ein Schmieröltank vorgesehen ist und das Ausgleichsfluid das Schmieröl des Verdichters ist.

13. Linearverdichter nach Anspruch 9, wobei der Versteller (I) ein pneumatisches Stellglied (50) mit einem Zylinder (91), der in die nicht an der Resonanz teilnehmende Anordnung (C) integriert ist, und mit einem Stößel (92) ist, der im Inneren des Zylinders (91) axial verschieblich ist und als bewegliches Anschlagmittel arbeitet, auf dem das Federmittel (8) der Resonanzanordnung sitzt.

14. Linearverdichter nach Anspruch 13, wobei das pneumatische Stellglied (50) ein Balg ist.

15. Linearverdichter nach Anspruch 9, wobei der Versteller (I) ein mechanisches Stellglied ist und die Resonanzanordnung über ein Federmittel (8) mit einer nicht an der Resonanz teilnehmenden Anordnung (C) des Verdichters gekoppelt ist, und wobei das mechanische Stellglied (60, 70, 80) betätigbar mit der nicht an der Resonanz teilnehmenden Anordnung (C) und dem Federmittel (8) gekoppelt ist und von einem Antriebsmittel (M) betätigt wird, welches das mechanische Stellglied (60, 70, 80) in eine andere Betriebsstellung verfährt.

16. Linearverdichter nach Anspruch 15, wobei das Antriebsmittel (M) ein Motor, ein hydraulisches Stellglied oder ein pneumatisches Stellglied ist.

17. Linearverdichter nach Anspruch 16, wobei das Antriebsmittel (M) betätigbar mit der Steuereinheit (30) verbunden ist.

18. Linearverdichter nach Anspruch 15, wobei das mechanische Stellglied (60,' 70) einen linear verschieblichen Nocken (61, 61') oder einen Drehnocken (71), der mit der nicht an der Resonanz teilnehmenden Anordnung (C) des Verdichters gekoppelt ist, sowie eine Führung (64, 64', 72) umfaßt, die einen Nockenstößel festlegt, welcher den linear verschieblichen Nocken (61, 61') oder den Drehnocken (71) mit dem Federmittel (8) koppelt.

19. Linearverdichter nach Anspruch 18, wobei der linear verschiebliche Nocken (61) mit Stufen (62) versehen ist, die so bemessen sind, daß sie unterschiedliche Positionen für den Totpunkt des Kolbens (10) am Ende des Ansaughubes festlegen.

20. Linearverdichter nach Anspruch 19, wobei die dem linear verschieblichen Nocken (61) zugeordnete Führung (64) einen Kontaktabschnitt (64a) in einer Fläche der Führung (64) trägt, die dem linear verschieblichen Nocken (61) gegenüberliegt.

21. Linearverdichter nach Anspruch 19, wobei der Kontaktabschnitt (64a) ein konvexer Oberflächenabschnitt ist, der in die dem linear verschieblichen Nocken (61) gegenüberliegende Fläche der Führung (64) integriert ist.

22. Linearverdichter nach Anspruch 18, wobei der linear verschiebliche Nocken (61') eine Rampenfläche (63') aufweist, die gleitend an einer gegenüberliegenden, geneigten Fläche (66) der Führung (64') anliegt.

23. Linearverdichter nach Anspruch 18, wobei der Drehnocken (71) mit einer durchgängigen Rampe (71a) versehen ist, die so bemessen ist, daß sie durch Betätigen der Führung (72) kontinuierlich unterschiedliche Positionen für den Totpunkt des Kolbens (10) am Ende des Ansaughubes festlegt.

24. Linearverdichter nach Anspruch 15, wobei das mechanische Stellglied ein mechanisches Anschlagmittel (80) umfaßt, das auf die nicht an der Resonanz teilnehmende Anordnung (C) aufgeschraubt und betätigbar mit der Resonanzanordnung gekoppelt ist, um durch Drehen um seine Längsachse den Totpunkt des Kolbens (10) am Ende des Ansaughubes zu verändern.

25. Linearverdichter nach Anspruch 9, wobei der Versteller (I) ein pneumatisches Stellglied (50) und das Ausgleichsfluid das vom Verdichter verdichtete Kühlgas ist.

26. Linearverdichter nach Anspruch 25, ferner mit einem Steuerventil (100), das durch mindestens eine Öffnung (93) des Zylinders (91) in Fluidverbindung mit dem Zylinder (91) des pneumatischen Stellgliedes (90) gehalten wird, wobei das Steuerventil (100) ein Dichtmittel (110) aufnimmt, das wahlweise zwischen einer geschlossenen Stellung, einer Druckaufbaustellung und einer Druckabbaustellung verschieblich ist, um wahlweise die Öffnung (93) des Zylinders (91) beim Ausstoßen des Verdichters zu blockieren bzw. das Innere des Zylinders (91) mit dem Inneren des Verdichtergehäuses zu verbinden.

27. Linearverdichter nach Anspruch 26, wobei das Dichtmittel (110) eine mit einem inneren Durchlaß (111) versehene Führung ist, die durch den Auslaßgasdruck und durch elastische Rückstellmittel (120) sowohl in der einen als auch in der anderen Richtung linear verschieblich ist, um die Ausrichtung und den Versatz des inneren Durchlasses (111) relativ zur Öffnung (93) bereitzustellen.

## Revendications

1. Compresseur linéaire comprenant un système pour régler des fréquences de résonance incluant, à l'intérieur d'une coque : un moteur linéaire (20) alimenté par un courant électrique alternatif présentant une fréquence d'alimentation électrique prédéterminée ; un cylindre (1) à l'intérieur duquel est définie une chambre de compression (CC) fermée par une plaque à soupapes (2) ; un piston (10) se déplaçant alternativement à l'intérieur du cylindre (1) dans des courses d'aspiration et de compression consécutives ; et des moyens d'actionnement (9) reliant de façon fonctionnelle le piston (10) au moteur linéaire (20), ledit piston (10) et lesdits moyens d'actionnement (9) formant une partie d'un ensemble résonant,
et incluant de plus :
- des moyens de détection (D) pour détecter une charge imposée au moteur linéaire (20) du compresseur, dans un état fonctionnel de ce dernier ayant rapport à la pression de gaz dans l'évacuation de celui-ci, et
- des moyens de réglage de fréquence associés de façon fonctionnelle aux moyens de détection (D) et à l'ensemble résonant, pour définir, comme une fonction de l'état fonctionnel détecté pour le gaz dans l'évacuation du compresseur, un réglage de fréquence à une valeur de la fréquence de résonance mécanique de l'ensemble résonant correspondant à la fréquence d'alimentation électrique, maintenant inchangée la distance minimale entre le piston (10) et la plaque à soupapes (2) à la fin de chaque course de compression, en modifiant la masse de l'ensemble résonant et/ou la course moyenne du piston (10), la variation de la course fonctionnelle du piston (10) étant obtenue en modifiant le point mort du piston (10) à la fin de la course d'aspiration.

2. Compresseur linéaire selon la revendication 1, dans lequel les moyens de détection (D) détectent au moins l'un des états de : pression et température du gaz comprimé dans l'évacuation du compresseur, et courant électrique fonctionnel du moteur linéaire (20).

3. Compresseur linéaire selon la revendication 2, dans lequel les moyens de réglage de fréquence sont conçus pour faire varier la course moyenne du piston (10), comprenant de plus une unité de commande (30) reliée fonctionnellement à la fois aux moyens de détection (D) et aux moyens de réglage, pour recevoir, à partir des premiers, des informations au sujet de l'un des états fonctionnels de pression et de température du gaz dans l'évacuation du compresseur et de courant électrique fonctionnel du moteur linéaire (20) et pour donner des instructions aux moyens de réglage pour faire varier la course moyenne du piston (10) ou pour faire varier la masse de l'ensemble résonant.

4. Compresseur linéaire selon la revendication 1, dans lequel les moyens de réglage de fréquence sont conçus pour effectuer une variation de la masse de l'ensemble résonant qui est obtenue en modifiant la masse des moyens d'actionnement (9) et/ou du piston (10).

5. Compresseur linéaire selon la revendication 4, dans lequel chaque pièce de l'ensemble résonant, destinée à voir sa masse modifiée, comprend une chambre interne (11) contenant un fluide d'équilibrage et qui est maintenue en communication fluidique avec un réservoir de fluide d'équilibrage défini à l'intérieur de la coque du compresseur, la variation de la masse de l'ensemble résonant étant obtenue en modifiant la masse du fluide à l'intérieur de la chambre interne (11).

6. Compresseur linéaire selon la revendication 5, dans lequel le piston (10) comprend une chambre interne (11) présentant un volume constant et qui est maintenue en communication fluidique avec des moyens à impulseur du fluide d'équilibrage (130) prévus à l'intérieur de la coque en communication fluidique avec le réservoir de fluide d'équilibrage, de façon à pomper sélectivement ledit fluide d'équilibrage dans et hors de cette chambre interne (11) du piston (10).

7. Compresseur linéaire selon la revendication 6, dans lequel le fluide d'équilibrage est défini par l'huile de lubrification du compresseur prévue dans un réservoir d'huile défini au fond de la coque du compresseur.

8. Compresseur linéaire selon la revendication 1, dans lequel la modification du point mort du piston (10) à la fin de la course d'aspiration est obtenue par des moyens de réglage sous la forme d'un impulseur (I), qui est associé de façon fonctionnelle à l'ensemble résonant et à l'unité de commande (30), de façon à être entraîné par cette dernière entre un état non fonctionnel, dans lequel il ne produit aucune modification de la course du piston (10) et un état fonctionnel, dans lequel il modifie la course du piston (10) pour régler la fréquence de résonance mécanique de l'ensemble résonant à la fréquence de résonance d'alimentation électrique.

9. Compresseur linéaire selon la revendication 8, dans lequel l'impulseur (I) est un actionneur hydraulique (40), un actionneur pneumatique (50) ou un actionneur mécanique (60).

10. Compresseur linéaire selon la revendication 9, dans lequel l'actionneur hydraulique (40) ou l'actionneur pneumatique (50) est maintenu en communication fluidique avec un réservoir de fluide d'équilibrage prévu à l'intérieur de la coque, ledit actionneur hydraulique (40) ou ledit actionneur pneumatique (50) étant défini dans une partie non résonante du compresseur.

11. Compresseur linéaire selon la revendication 10, dans lequel l'ensemble résonant comprend des moyens à ressort (8) reliant l'ensemble résonant à un ensemble non résonant (C) du compresseur, l'actionneur hydraulique (40) ou l'actionneur pneumatique (50) étant relié fonctionnellement aux moyens à ressort (8).

12. Compresseur linéaire selon la revendication 1 1, dans lequel est prévu un réservoir d'huile de lubrification au fond de la coque et le fluide d'équilibrage est l'huile de lubrification du compresseur.

13. Compresseur linéaire selon la revendication 9, dans lequel l'impulseur (I) est un actionneur pneumatique (50) ayant un cylindre (91) incorporé à l'ensemble non résonant (C) et un plongeur (92) déplaçable axialement à l'intérieur du cylindre (91) et fonctionnant comme moyens d'arrêt mobile sur lesquels sont en appui les moyens à ressort (8) de l'ensemble résonant.

14. Compresseur linéaire selon la revendication 13, dans lequel l'actionneur pneumatique (50) est un soufflet.

15. Compresseur linéaire selon la revendication 9, dans lequel l'impulseur (I) est un actionneur mécanique, et l'ensemble résonant est relié par des moyens à ressort (8) à un ensemble non résonant (C) du compresseur, l'actionneur mécanique (60, 70, 80) étant relié de façon fonctionnelle à l'ensemble non résonant (C) et aux moyens à ressort (8) et mis en service par des moyens d'entraînement (M), qui déplacent ledit actionneur mécanique (60, 70, 80) vers différentes positions fonctionnelles.

16. Compresseur linéaire selon la revendication 15, dans lequel les moyens d'entraînement (M) sont un moteur, un actionneur hydraulique ou un actionneur pneumatique.

17. Compresseur linéaire selon la revendication 16, dans lequel les moyens d'entraînement (M) sont reliés fonctionnellement à l'unité de commande (30).

18. Compresseur linéaire selon la revendication 15, dans lequel l'actionneur mécanique (60, 70) comprend une came déplaçable de façon linéaire (61, 61') ou une came rotative (71), associée à l'ensemble non résonant (C) du compresseur, ainsi qu'un coulisseau (64, 64', 72) définissant un suiveur de came reliant la came déplaçable de façon linéaire (61, 61') ou la came rotative (71) aux moyens à ressort (8).

19. Compresseur linéaire selon la revendication 18, dans lequel la came déplaçable de façon linéaire (61) est munie de marches (62) qui sont dimensionnées pour définir différentes positions du point mort du piston (10) à la fin de la course d'aspiration.

20. Compresseur linéaire selon la revendication 19, dans lequel le coulisseau (64) associé à la came déplaçable de façon linéaire (61) porte une partie de contact (64a) dans une surface dudit coulisseau (64) se trouvant en face de la came déplaçable de façon linéaire (61).

21. Compresseur linéaire selon la revendication 19, dans lequel la partie de contact (64a) est une partie de surface convexe incorporée à la surface du coulisseau (64) se trouvant en face de la came déplaçable de façon linéaire (61).

22. Compresseur linéaire selon la revendication 18, dans lequel la came déplaçable de façon linéaire (61') présente une surface à rampe (63') qui est en appui de façon coulissante contre une surface inclinée en vis-à-vis (66) du coulisseau (64').

23. Compresseur linéaire selon la revendication 18, dans lequel la came rotative (71) est munie d'une rampe continue (71 a) qui est dimensionnée de façon à définir, de façon continuelle, en agissant sur le coulisseau (72), différentes positions du point mort du piston (10) à la fin de la course d'aspiration.

24. Compresseur linéaire selon la revendication 15, dans lequel l'actionneur mécanique comprend un moyen d'arrêt mécanique (80) vissé sur l'ensemble non résonant (C) et qui est accouplé fonctionnellement à l'ensemble résonant de façon à modifier le point mort du piston (10) à la du piston (10) à la fin de la course d'aspiration, quand il tourne autour de son axe longitudinal.

25. Compresseur linéaire selon la revendication 9, dans lequel l'impulseur (I) est un actionneur pneumatique (50) et le fluide d'équilibrage est un gaz réfrigérant comprimé par le compresseur.

26. Compresseur linéaire selon la revendication 25, comprenant de plus un distributeur de commande (100) maintenu en communication fluidique avec le cylindre (91) de l'actionneur pneumatique (90) par au moins une ouverture (93) dudit cylindre (91), ledit distributeur de commande (100) logeant des moyens d'étanchéité (110) qui sont déplaçables sélectivement entre une position fermée, une position de pressurisation et une position de dépressurisation, pour bloquer, sélectivement, l'ouverture (93) du cylindre (91) lors de l'évacuation du compresseur et fait communiquer l'intérieur du cylindre (91) avec l'intérieur de la coque du compresseur.

27. Compresseur linéaire selon la revendication 26, dans lequel les moyens d'étanchéité (110) sont un tiroir muni d'un passage interne (111) et qui est déplaçable linéairement dans l'un et dans l'autre sens, par la pression du gaz d'évacuation et par des moyens élastiques de rappel (120), de façon à permettre l'alignement et le désalignement dudit passage interne (111) par rapport à l'ouverture (93).
